# EUROPEAN PATENT SPECIFICATION

(11) **EP 1 138 993 B1**
(45) Date of publication and mention of the grant of the patent: **21.03.2007**
(21) Application number: 99974109.3
(22) Date of filing: 13.10.1999
(51) Int. Cl.: F16K 31/06

(54) **SOLENOID VALVE**
ELEKTROMAGNETISCHES VENTIL
ELECTROROBINET

(43) Date of publication of application: 04.10.2001
(73) Proprietor: MITSUBISHI DENKI KABUSHIKI KAISHA, Chiyoda-ku Tokyo 100-8310 (JP)
(72) Inventor: KOBAYASHI, Yoshiki, Mitsubishi Denki Kabush Kaisha, Tokyo 100-8 310 (JP); SEKIYA, Mutsuo, Mitsubishi Denki Kabushiki Kaisha, Tokyo 100-8310 (JP)
(74) Representative: HOFFMANN EITLE
(86) International application number: PCT/JP1999/005642
(87) International publication number: WO 2001/027511

(56) References cited:
- JP-A- 8 014 432
- JP-A- 8 330 131
- JP-A- 10 089 522
- JP-A- 11 148 575
- JP-U- 3 094 480
- US-A- 5 848 613

## Description

### TECHNICAL FIELD

The present invention relates to an electro-magnetic control valve in which a flow rate of fluid such as oil or the like is controlled.

### BACKGROUND ART

A valve opening timing of a suction valve and/or an exhaust valve used in an internal combustion engine is controlled in a variable valve timing device, and an oil control valve, in which the supply of oil is controlled in the variable valve timing device, is known as an electro-magnetic control valve.

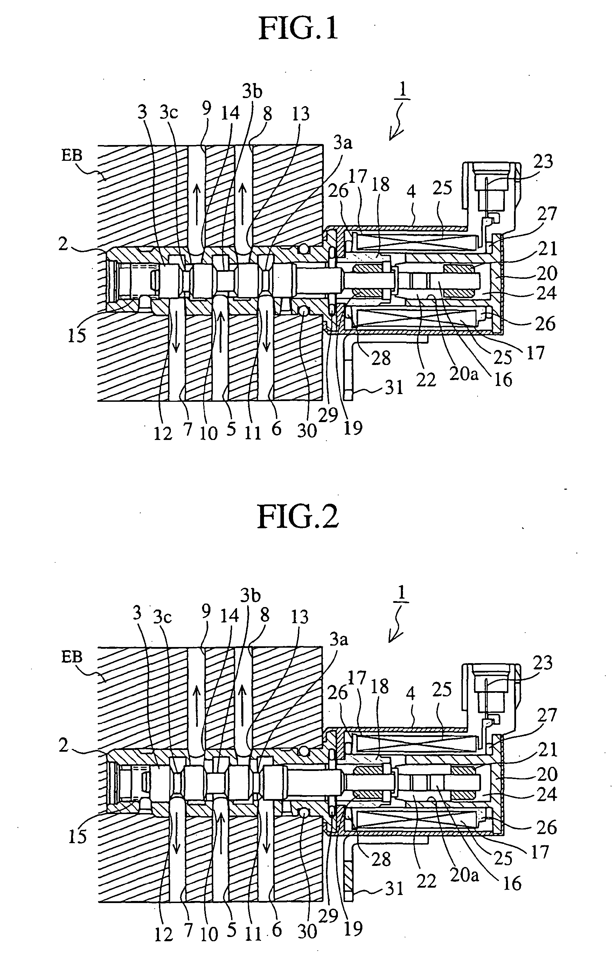

Fig. 1 and Fig. 2 are respectively sectional views showing an example of a conventional oil control valve. In Fig. 1 and Fig. 2, 1 indicates an oil control valve. The oil control valve 1 is mainly composed of a cylindrical valve housing 2 and a magnetic driving unit 4. A spool 3 arranged in the cylindrical valve housing 2 is moved in an axial direction of the cylindrical valve housing 2 so as to slide on a surface of the cylindrical valve housing 2. A supply line 5, a pair of drain lines 6 and 7 and a plurality of ports 10 to 14 corresponding to a first line 8 and a second line 9 are formed on an external circumferential surface of the cylindrical valve housing 2. Oil is supplied to a variable valve timing device through the supply line 5. A spring 15 is arranged on the inside (the left end in each of Fig. 1 and Fig. 2) of the cylindrical valve housing 2. One end of the spool 3 is always pressed by the spring 15 toward the magnetic driving unit 4. A plurality of small diameter portions 3a, 3b and 3c of the outer circumference of the spool 3 are formed at prescribed positions of the outer circumference of the spool 3. When the spool 3 is moved so as to slide on the surface of the cylindrical valve housing 2, one designated line leads to another designated line through each of the small diameter portions 3a, 3b and 3c. The pair of designated lines are composed of the combination of the supply line 5 and the first line 8 or the second line 9 or the combination of the drain line 6 or 7 and the first line 8 or the second line 9. The oil control valve 1 is arranged in a concave portion of an engine block EB, and the lines 5 to 9 are formed in the engine block EB.

Also, a movable shaft 16 is arranged in the magnetic driving unit 4 so as to function as a movable shaft of the magnetic driving unit 4, and the other end of the spool 3 faces one end of the movable shaft 16 so as to coaxially arrange the spool 3 and the movable shaft 16. The movable shaft 16 can make the spool 3 move in the axial direction of the valve housing 2 against a resilient force of the spring 15 according to a suction force generated in a linear solenoid 17 of the magnetic driving unit 4. A cylindrical boss 18 is arranged in the inside of the magnetic driving unit 4 as a part of the magnetic driving unit 4 so as to be placed on one end of the magnetic driving unit 4 in the axial direction of the movable shaft 16, and a first sleeve bearing member 19 is inserted into the boss 18 by a prescribed pressure and is fixed in the boss 18. The first sleeve bearing member 19 functions as a sleeve bearing so as to arrange the end (which faces the spool 3) of the movable shaft 16 in the inside and to support the movable shaft 16. Also, a core 20 having a cylindrical concave portion 20a is arranged in the inside of the magnetic driving unit 4 as a part of the magnetic driving unit 4 so as to be placed on the other end of the magnetic driving unit 4 in the axial direction of the movable shaft 16. The core 20 faces the cylindrical boss 18 in the axial direction of the movable shaft 16, and a second sleeve bearing member 21 is inserted into the core 20 by a prescribed pressure and is fixed in the core 20. The second sleeve 21 functions as a sleeve bearing to support the other end of the movable shaft 16 to allow the movable shaft 16 to slide into the second sleeve bearing member 21. In addition, a plunger 22 is fixed to the movable shaft 16 as a moving core so as to be placed between the first sleeve 19 and the second sleeve bearing member 21. Also, the linear solenoid 17 is connected with an electronic control unit through a terminal 23. Here, in Fig. 1 and Fig. 2, 24 indicates a spacer arranged in the internal bottom of the concave portion 20a of the core 20, 25 indicates a coil of the linear solenoid 17, 26 indicates a bobbin of the linear solenoid 17, 27 to 30 respectively indicate an O-ring, and 31 indicates a bracket.

Next, an operation is described.

As shown in Fig. 1, when a control signal output from a cam angle sensor (not shown) is, for example, input to the electronic control unit, the oil control valve 1 is operated according to the control signal under the control of the electronic control unit. More precisely, a magnetic suction force is generated in the linear solenoid 17 according to the control signal sent from the electronic control unit, and the plunger 22 is moved toward the axial direction of the valve housing 2. Therefore, as shown in Fig. 2, the movable shaft 16 fixed to the plunger 22 and the spool 3 facing the movable shaft 16 are moved and slid by a prescribed stroke against the resilient force of the spring 15. Here, the supply line 5 leads to the first line 8 or the second line 9 through the spool 3 according to a degree of stroke in the movement and sliding of the movable shaft 16 and the spool 3. The drain line 6 or 7 leads to the first line 8 or the second line 9 through the spool 3 according to a degree of stroke in the movement and sliding of the movable shaft 16 and the spool 3. Next, in cases where the oil control valve 1 is desired to be closed, the generation of the magnetic suction force is stopped in the linear solenoid 17. Therefore, the spool 3 is moved to the original position shown in Fig. 1 by the resilient force of the spring 15.

Here, the valve open-close operation of the spool 3, which functions as a valve member used for the lines 5 to 9 of the engine block EB, considerably depends on the smooth movement and sliding of the movable shaft 16 which is supported by the inner circumferential surfaces of both the first sleeve bearing member 19 and the second sleeve bearing member 21. Therefore, in cases where the movement or sliding of the movable shaft 16 is not smoothly performed, the valve open-close operation of the spool 3 is not smoothly performed. In this case, there is probability that the valve open timing of the suction valve and/or the exhaust valve used in an internal combustion engine is not controlled.

However, in the conventional oil control valve 1, the external interferential surface of the movable shaft 16 is supported by the whole inner circumferential surfaces of both the first sleeve bearing member 19 and the second sleeve bearing member 21. Therefore, in cases where foreign matter has entered a space between the movable shaft 16 and the sleeve bearing members 19 or 21 or in cases where abrasive powdered matter has come off from the movable shaft 16 or the sleeve bearing member 19 or 21 in the abrasion caused by the movement of the movable shaft 16, a moving-sliding resistance of the movable shaft 16 is considerably increased because foreign matter or abrasive powdered matter has disturbed the movement of the movable shaft 16, and the original performance of the oil control valve 1 cannot be maintained. In a worst case, the movement of the movable shaft 16 freezes which results in complete failure of the oil control valve 1.

The present invention is provided to solve the above problems, and an object of the present invention is to provide an electro-magnetic control valve having a sleeve bearing in which a movement and sliding performance of a movable shaft is maintained even though foreign matter or abrasive powdered matter has entered a space between the sleeve bearing and the movable shaft.

Here, an oil control valve, in which a ball bearing is used as a bearing member for a movable shaft, is disclosed in the Published Unexamined Japanese Patent Application H7-151257 (1995). In this application, constituent elements other than the ball bearing used as a bearing member are the same as those of the conventional oil control valve 1 shown in Fig. 1 and Fig. 2. Therefore, this application is introduced as a reference literature which describes the prior art of the present invention.

US 5 848 613 describes an electromagnetic pressure regulating valve having a shaft of the valve held between bushings. In order to lubricate the shaft and reduce friction of a movement of the shaft relative to the bushings, the bushings may be provided with a V-shaped groove for flowing oil upon movement of the shaft relative to the bushings.

### DISCLOSURE OF THE INVENTION

An electro-magnetic control valve according to the present invention comprises the features defined in claim 1.

Therefore, even though foreign matter or abrasive powdered matter has entered a space between the movable shaft and the sleeve bearing member, because the foreign matter or the abrasive powdered matter can be collected in the groove when the movable shaft is rotated or moved, the entry of the foreign matter or the abrasive powdered matter into the space can be prevented. Therefore, increases in a moving-sliding resistance of the movable shaft can be prevented. Also, because both ends of the groove are opened on both end surfaces of the sleeve bearing member in the axial direction of the sleeve bearing member, the foreign matter or the like collected in the groove can be efficiently drawn off to the outside of the sleeve bearing member. Therefore, the life of the sleeve bearing member can be prolonged. In addition, because the groove is opened on both end surfaces of the sleeve bearing member in the axial direction of the sleeve bearing member, the sleeve bearing member with the groove can be easily produced by using a metallic mold core in which a convex portion is arranged to form the groove. Also, because the groove is arranged on the inner circumferential surface of the sleeve bearing member, an area of the inner circumferential surface functioning as a moving-sliding plane can be reduced. Therefore, the moving-sliding resistance of the movable shaft can be reduced. In particular, in cases where a plurality of grooves is arranged, the moving-sliding resistance of the movable shaft can be considerably reduced.

In the electro-magnetic control valve of the present invention, the groove is formed with a circular or a rectangular cross section. Therefore, when the sleeve bearing member with the groove is formed, the metallic mold core can be easily taken out. Accordingly, the sleeve bearing member with the groove can be manufactured efficiently.

In the electro-magnetic control valve of the present invention, the groove is formed in a spiral shape along the axial direction of the sleeve bearing member between the end surfaces of the sleeve bearing member. Therefore, when the movable shaft is slightly rotated, the foreign matter or the like collected in the spiral groove can be easily drawn off to the outside of the sleeve bearing member. Accordingly, because increases in the moving-sliding resistance of the movable shaft due to the entry of the foreign matter or the like can be prevented, the sleeve bearing member can be provided while a bearing performance of the member can be maintained at a high level in a long period. Also, because the groove is formed in the spiral shape, the inner circumferential surface of the sleeve bearing member can substantially come in uniform contact with the whole outer circumferential surface of the movable shaft, and the movement and sliding of the sleeve bearing member can be stabilized.

In the electro-magnetic control valve of the present invention, the sleeve bearing member is formed by molding or is formed out of metallic particles by sintering. Therefore, the sleeve bearing member with the groove can be easily produced, and increases in a production cost due to the groove arrangement can be suppressed.

In the electro-magnetic control valve of the present invention, the inner circumferential surface of the sleeve bearing member is formed out of an oil-containing sintered material. Therefore, the sleeve bearing member, which has superior moving-sliding performance and a long component life, can be provided.

In the electro-magnetic control valve of the present invention, the inner circumferential surface of the sleeve bearing member is formed out of fluorine-containing resin. Therefore, the sleeve bearing member, which has superior moving-sliding performance and high productivity, can be provided.

### BRIEF DESCRIPTION OF THE DRAWINGS

Fig. 1 is a sectional view showing a conventional oil control valve, which is set to a pre-driven condition, as an example of a conventional electro-magnetic control valve.
Fig. 2 is a sectional view showing a conventional oil control valve, which is set to a post-driven condition, as an example of a conventional electro-magnetic control valve.
Fig. 3 is a sectional view showing main components of a sleeve bearing member used in an oil control valve which represents an electro-magnetic control valve according to a first embodiment of the present invention.
Fig. 4 is a sectional view showing main components of a sleeve bearing member used in an oil control valve which represents an electro-magnetic control valve according to a second embodiment of the present invention.
Fig. 5 is a sectional view showing main components of a sleeve bearing member used in an oil control valve which represents an electro-magnetic control valve according to a third embodiment not in accordance with the present invention.
Fig. 6 is a perspective side view showing main components of a sleeve bearing member used in an oil control valve which represents an electro-magnetic control valve according to a fourth embodiment of the present invention.
Fig. 7 is a sectional view showing a hydraulic actuator in which the oil control valve representing the electro-magnetic control valve according to the first, second, third and fourth embodiments of the present invention can be arranged.

### BEST MODE FOR CARRYING OUT THE INVENTION

Hereinafter, the best mode for carrying out the present invention will now be described with reference to the accompanying drawings to explain the present invention in more detail.

### EMBODIMENT 1

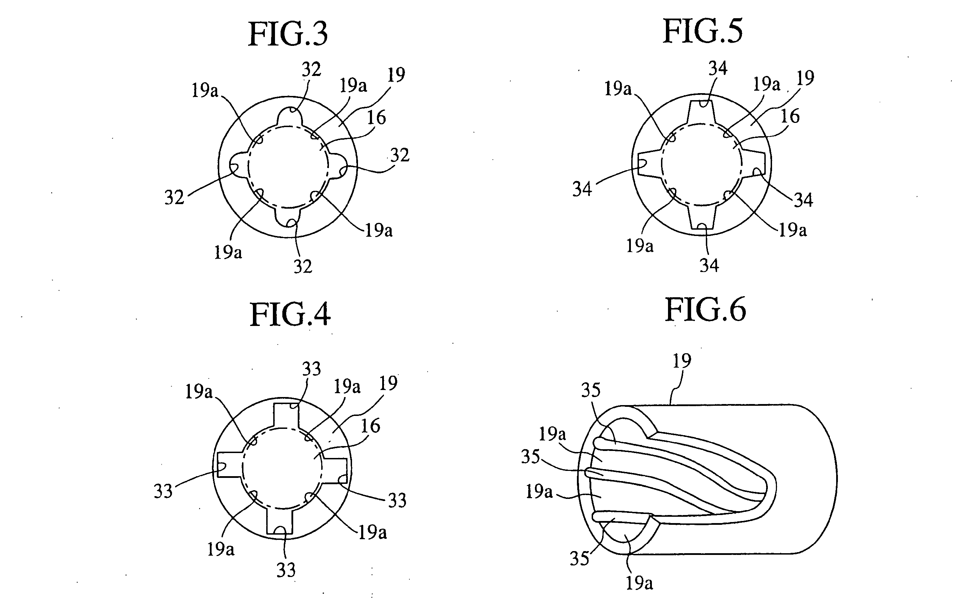

Fig. 3 is a sectional view showing main components of a sleeve bearing member used in an oil control valve which represents an electro-magnetic control valve according to a first embodiment of the present invention. Here, of the constituent elements of an oil control valve representing an electro-magnetic control valve according to a first embodiment, those constituent elements, which are the same as those of the conventional oil control valve shown in Fig. 1 and Fig. 2, are indicated by the same reference numerals as those shown in Fig. 1 and Fig. 2, and additional description of such constituent elements is omitted.

In Fig. 3, 32 indicates a plurality of grooves each of which is arranged on the inner interferential surface 19a of the first sleeve bearing member 19 and extends in the axial direction of the first sleeve bearing member 19. In the first embodiment, the four grooves 32 are arranged at equal intervals around a center axis of the first sleeve bearing member 19 in the same sectional area of the first sleeve bearing member 19. Each groove 32 is formed with a semi-circular or a substantially circular cross section and is recessed into the inner interferential surface 19a of the first sleeve bearing member 19 to have a sufficient depth. Therefore, foreign matter can be reliably collected into the grooves 32. Also, each groove 32 has the same length as that of the first sleeve bearing member 19 in the axial direction of the first sleeve bearing member 19, and both ends of each groove 32 are opened on both end surfaces of the first sleeve bearing member 19.

The first sleeve bearing member 19 with the grooves 32 is simply formed by molding or is simply formed out of metallic particles by sintering. Also, it is preferred that the inner circumferential surface 19a of the first sleeve bearing member 19 is processed by coating the inner circumferential surface 19a with fluorine-containing resin such as poly-tetra-fluoro-ethylene. Because the fluorine-containing resin material functions as a protective film, the movement and sliding performance of the movable shaft 16 can be stably obtained. Also, because the surface processing using the fluorine-containing resin material can be comparatively easy, the first sleeve bearing member 19 can be efficiently manufactured. Also, it is applicable that the inner circumferential surface 19a of the first sleeve bearing member 19 be formed out of an oil-containing sintered material. In this case, a first sleeve bearing member 19 can be obtained in which an inner circumferential surface 19a has superior movement and sliding performance and has a long product life.

In the first embodiment, the first sleeve bearing member 19 is adopted as a sleeve bearing member to move and slide the movable shaft 16. However, it is preferred that the four grooves 32 are also arranged in the second sleeve bearing member 21.

Next, an operation is described.

The movable shaft 16 is moved and slid in the first sleeve bearing member 19 and the second sleeve bearing member 21 according to the combination of the magnetic suction force of the linear solenoid 17 and the resilient force of the spring 2 shown in Fig. 1 and Fig. 2. More precisely, the external circumferential surface of the movable shaft 16 is moved and slid on the internal circumferential surface of each of the sleeve bearing members 19 and 21. Therefore, even though foreign matter has entered a space between the movable shaft 16 and each sleeve bearing member or even though abrasive powdered matter has produced between the movable shaft 16 and each sleeve bearing member in the abrasion, the foreign matter or the abrasive powdered abrasion matter is collected into the grooves 32 and are drawn off from the ends of the grooves 32. Accordingly, increases in the moving-sliding resistance of the movable shaft 16 due to the entry of the foreign matter or the production of the abrasive powdered matter can be prevented, and the product life of the first sleeve bearing member 19 and the second sleeve bearing member 21 can be prolonged.

Also, in the first embodiment, because the four grooves 32 are formed on the inner circumferential surfaces of both the first sleeve bearing member 19 and the second sleeve bearing member 21, an area of the inner circumferential surfaces functioning as a moving-sliding plane can be reduced as compared with that in the prior art. Accordingly, the moving-sliding resistance of the movable shaft 16 can be reduced.

In the first embodiment, the four grooves 32 are arranged in each of the sleeve bearing members 19 and 21. However, even though only one groove 32 is arranged on the inner circumferential surface of each of the sleeve bearing members 19 and 21, a superior effect can be obtained in that increases in the moving-sliding resistance of the movable shaft 16 due to the entry of the foreign matter or the production of the abrasive powdered matter is prevented.

### EMBODIMENT 2

Fig. 4 is a sectional view showing main components of a sleeve bearing member used in an oil control valve which represents an electro-magnetic control valve according to a second embodiment of the present invention. Here, of the constituent elements of an oil control valve representing an electro-magnetic control valve according to a second embodiment, those constituent elements, which are the same as those of the oil control valve of the first embodiment shown in Fig. 3, are indicated by the same reference numerals as those shown in Fig. 3, and additional description of such constituent elements is omitted.

Features of the oil control valve according to the second embodiment are as follows. A plurality of grooves 33 are arranged on the inner interferential surface 19a of the first sleeve bearing member 19 and extend in the axial direction of the first sleeve bearing member 19. Each groove 33 is formed with a rectangular cross section. In the second embodiment, the four grooves 33 are arranged at equal intervals around a center axis of the first sleeve bearing member 19 in the same sectional area of the first sleeve bearing member 19. Also, each groove 33 has the same length as that of the first sleeve bearing member 19 in the axial direction of the first sleeve bearing member 19, and both ends of each groove 33 are opened on both end surfaces of the first sleeve bearing member 19. Also, each groove 33 has a sufficient depth. Therefore, foreign matter can be reliably collected into the grooves 33.

In the second embodiment, it is preferred that the inner circumferential surface 19a of the first sleeve bearing member 19 is processed in the same manner as in the first embodiment by coating the inner circumferential surface 19a with the fluorine-containing resin. Also, it is applicable that the inner circumferential surface 19a of the first sleeve bearing member 19 be formed out of an oil-containing sintered material.

Also, in the second embodiment, the first sleeve bearing member 19 is adopted as a sleeve bearing member to move and slide the movable shaft 16. However, it is preferred that the four grooves 33 are also arranged in the second sleeve bearing member 21.

### EMBODIMENT 3

Fig. 5 is a sectional view showing main components of a sleeve bearing member used in an oil control valve which represents an electro-magnetic control valve according to a third embodiment not in accordance with the present invention. Here, of the constituent elements of an oil control valve representing an electro-magnetic control valve according to a third embodiment, those constituent elements, which are the same as those of the oil control valve of the first or second embodiment shown in Fig. 3 or Fig. 4, are indicated by the same reference numerals as those shown in Fig. 3 or Fig. 4, and additional description of such constituent elements is omitted.

Features of the oil control valve according to the third embodiment are as follows. A plurality of grooves 34 are arranged on the inner interferential surface 19a of the first sleeve bearing member 19 and extend in the axial direction of the first sleeve bearing member 19. Each groove 34 is formed with a trapezoid cross section. In the third embodiment, the four grooves 34 are arranged at equal intervals around a center axis of the first sleeve bearing member 19 in the same sectional area of the first sleeve bearing member 19. Also, each groove 34 has the same length as that of the first sleeve bearing member 19 in the axial direction of the first sleeve bearing member 19, and both ends of each groove 34 are opened on both end surfaces of the first sleeve bearing member 19. Also, eachgroove 34 has a sufficient depth. Therefore, foreign matter can be reliably collected into the grooves 34.

In the third embodiment, it is preferred that the inner circumferential surface 19a of the first sleeve bearing member 19 is processed in the same manner as in the first embodiment by coating the inner circumferential surface 19a with the fluorine-containing resin. Also, it is applicable that the inner circumferential surface 19a of the first sleeve bearing member 19 be formed out of an oil-containing sintered material.

Also, in the third embodiment, the first sleeve bearing member 19 is adopted as a sleeve bearing member to move and slide the movable shaft 16. However, it is preferred that the four grooves 34 are also arranged in the second sleeve bearing member 21.

### EMBODIMENT 4

Fig. 6 is a perspective side view showing main components of a sleeve bearing member used in an oil control valve which represents an electro-magnetic control valve according to a fourth embodiment of the present invention. Here, of the constituent elements of an oil control valve representing an electro-magnetic control valve according to a fourth embodiment, those constituent elements, which are the same as those of the oil control valve of the first, second or third embodiment shown in Fig. 3, Fig. 4 or Fig. 5, are indicated by the same reference numerals as those shown in Fig. 3, Fig. 4 or Fig. 5, and additional description of such constituent elements is omitted.

Features of the oil control valve according to the fourth embodiment are as follows. A plurality of grooves 35 respectively formed in a spiral shape are arranged in positions between both ends of the first sleeve bearing member 19 in the axial direction of the first sleeve bearing member 19. In this configuration of the oil control valve, the foreign matter or the like collected into the grooves 35 can be easily drawn off from the first sleeve bearing member 19 because the movable shaft 16 is slightly rotated. Therefore, because increases in the moving-sliding resistance of the movable shaft 16 due to the entry of the foreign matter can be prevented, a first sleeve bearing member 19 can be provided in which a high bearing performance can be maintained for a longtime. Also, because the grooves 35 are respectively formed in a spiral shape, the inner circumferential surface 19a of the first sleeve bearing member 19 can substantially come in uniform contact with the whole outer circumferential surface of the movable shaft 16, and the movement and sliding of the movable shaft 16 can be stabilized.

In the fourth embodiment, it is preferred that the inner circumferential surface 19a of the first sleeve bearing member 19 is processed in the same manner as in the first embodiment by coating the inner circumferential surface 19a with the fluorine-containing resin. Also, it is applicable that the inner circumferential surface 19a of the first sleeve bearing member 19 be formed out of an oil-containing sintered material.

Also, in the fourth embodiment, each groove 35 is formed with a semi-circular or a substantially circular cross section in the same manner as in the first embodiment. However, it is applicable that each groove 35 be formed with a rectangular cross section in the same manner as in the second or third embodiment.

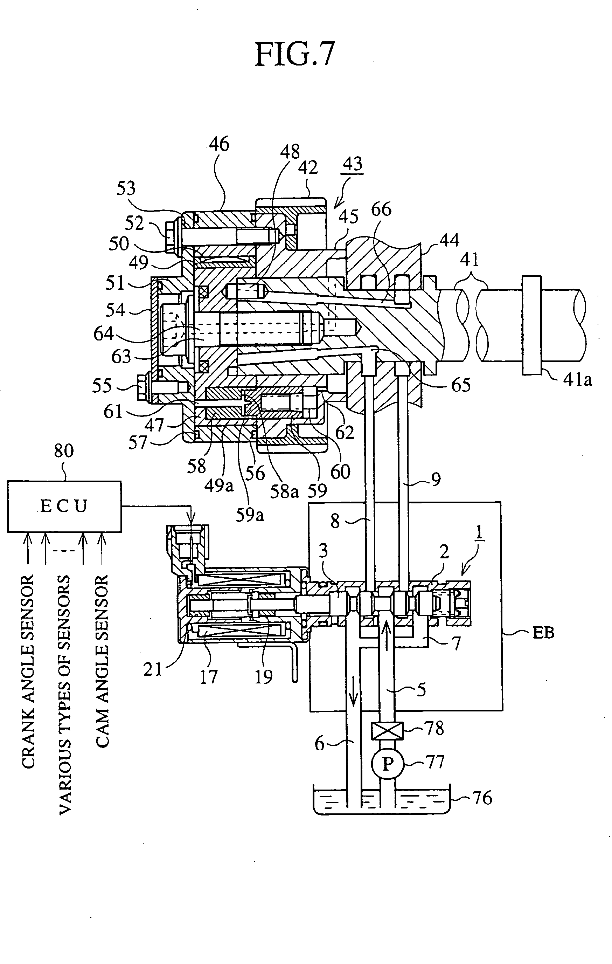

The electro-magnetic control valve according to the present invention can be applied to a variable valve timing device shown in Fig. 7 as the above-described electro-magnetic control valve for the oil control valve. In Fig. 7, 41 indicates a suction-side cam shaft (hereinafter, called a cam shaft) having a suction-side cam 41a. 42 indicates a timing pulley arranged on one end of the cam shaft 41. 43 indicates an actuator which is used for a variable valve timing device and is connected with the cam shaft 41. When the actuator 43 is driven by using lubricating oil of an engine (not shown) as hydraulic oil, a rotation phase angle of the cam shaft 41 to a crank shaft (not shown) is changed to successively change an open-close timing of a suction valve (not shown). 44 indicates a bearing of the cam shaft 41. 45 indicates a housing of the actuator 43. The housing 45 is fitted to the cam shaft 41 to rotate within a prescribed angle range.

46 indicates a case fixed to the housing 45. 47 indicates a vane type rotor which is fixedly connected with the cam shaft 41 by using a bolt 48 and is arranged in the case 46. The rotor 47 can be rotated relatively to the case 46. 49 indicates a chip seal placed between the case 46 and the rotor 47. The chip seal 49 prevents oil leakage between hydraulic oil chambers separated by both the case 46 and the rotor 47. 50 indicates a back spring formed of a plate spring. The back spring 50 makes the chip seal 49 come in contact with the rotor 47. 51 indicates a cover fixed to the case 46. 52 indicates a bolt for fastening the housing 45, the case 46 and the cover 51 to each other to fix them to each other. 53 indicates an O-ring. 54 indicates a plate. 55 indicates a bolt for fixing the plate 54 to the cover 51. 56 and 57 respectively indicate an O-ring. 58 indicates a columnar holder arranged in the rotor 47. The holder 58 has a catching hole 58a in which a plunger described later is caught. The catching hole 58a extends in the axial direction of the holder 58.

59 indicates a plunger arranged in the housing 45. The plunger 59 can move and slide in the housing 45. The plunger 59 has a catching shaft portion 59a which is caught in the catching hole 58a of the holder 58. 60 indicates a spring for pushing the plunger 59 toward the holder 58. 61 indicates a plunger oil passage for leading hydraulic oil to the catching hole 58a of the holder 58. The plunger 59 is moved against the resilient force of the spring 60 according to the hydraulic oil which is sent from the plunger oil passage 61 to the catching hole 58a of the holder 58, and the lock of the plunger 59 to the holder 58 is unlocked. 62 indicates an air hole. 63 indicates a shaft bolt for fixing the rotor 47 to the cam shaft 41. 64 indicates an air hole.

65 indicates a first oil passage arranged in both the cam shaft 41 and the rotor 47. The first oil passage 65 leads to a plurality of spark-lag hydraulic oil chambers (not shown) used to move the rotor 47 to a spark-lag position. 66 indicates a second oil passage arranged in both the cam shaft 41 and the rotor 47. The second oil passage 66 leads to a plurality of spark-advance hydraulic oil chambers (not shown) used to move the rotor 47 to a spark-advance position.

76 indicates an oil pan. 77 indicates an oil pump. 78 indicates an oil filter for removing impurities included in the hydraulic oil. A lubricating device comprises the oil pan 76, the oil pump 77 and the oil filter 78, and parts of an engine (not shown) are lubricated by the lubricating device. Also, a hydraulic oil supply device comprises the lubricating device and the oil control valve 1, and hydraulic oil is supplied to the actuator 43 by the hydraulic oil supply device.

80 indicates an electronic control unit. Each of an injector, an igniter and the oil control valve 1 is driven, and each of a fuel oil consumption, an ignition timing and a valve open-close timing is controlled according to a signal output from a suction air volume sensor, a throttle sensor, a water temperature sensor, a crank angle sensor or a cam angle sensor (not shown) under the control of the electronic control unit 80. Also, a valve close timing of the oil control valve 1 is controlled by the electronic control unit 80 after an ignition switch is set to "off".

Next, an operation of both the actuator 43 and the oil control valve 1 is described.

In an engine stop condition, the rotor 47 is placed at a position corresponding to the maximum spark-lag. That is, the rotor 47 is placed at a position at which a relative rotation phase angle of the rotor 47 to the housing 45 is maximized in the spark-lag direction. Also, the oil pump 77 is set to a stop condition. Therefore, no hydraulic oil is supplied to the first oil passage 65 or the second oil passage 66, and no hydraulic oil is supplied to the plunger oil passage 61. Therefore, the pressure of the hydraulic oil held in the actuator 43 is low. In this case, the plunger 59 is pressed toward the holder 58 by the resilient force of the spring 60, the catching shaft portion 59a of the plunger 59 is caught into the catching hole 58a of the holder 58. Therefore, the housing 45 and the rotor 47 are locked to each other.

Thereafter, when the operation of the engine is started in the lock condition of the housing 45 and the rotor 47, the operation of the oil pump is started, the pressure of the hydraulic oil supplied to the oil control valve 1 is increased, and the hydraulic oil is supplied from the oil control valve 1 to the spark-lag hydraulic oil chambers (not shown) of the actuator 43 through the first line 8 and the first oil passage 65. In this case, a slide plate (not shown) placed between each spark-lag hydraulic oil chamber and the corresponding spark-advance hydraulic oil chamber (not shown) is moved toward the corresponding spark-advance hydraulic oil chamber by the pressure of the spark-laghydraulic oil chamber, the spark-laghydraulic oil chamber leads to the plunger oil passage 61, the hydraulic oil is supplied from the plunger oil passage 61 to the catching hole 58a of the holder 58, and the plunger 59 is pressed by the hydraulic oil against the resilient force of the spring 60. Therefore, the catching shaft portion 59 of the plunger 59 is pushed out from the catching hole 58a of the holder 58 to unlock the locking between the plunger 59 and the rotor 47.

Next, to move the rotor 47 in the spark-advance direction, the hydraulic oil is supplied by the oil control valve 1 from the second line 9 to the spark-advance hydraulic oil chambers (not shown) through the second oil passage 66, the pressure of the hydraulic oil propagates to the plunger oil passage 61, and the plunger 59 is moved toward the housing 45 against the resilient force of the spring 60. Therefore, the locking of the plunger in the holder 58 is unlocked. Thereafter, in the unlocked condition, the supplied oil volume is adjusted by opening or closing the oil control valve 1 to adjust the oil volume in the spark-advance hydraulic oil chambers and the oil volume in the spark-lag hydraulic oil chambers, and the rotation phase angle of the rotor 47 to the housing 45 is advanced. Here, the pressure of the hydraulic oil supplied to the oil control valve 1 is controlled by performing an arithmetic calculation in the electronic control unit 80 according to signals, which are output from the crank angle sensor arranged on the side of the crank shaft and the cam angle sensor arranged on the side of the cam shaft, and is controlled according to a deviation of an actual rotation phase angle of the rotor 47 from a desired rotation phase angle. In other words, the feed-back control of the actual rotation phase angle to the desired rotation phase angle is performed.

In the fourth embodiment, the hydraulic actuator is described by using a vane type hydraulic actuator. However, as an example of another hydraulic actuator, it is applicable that a hydraulic actuator using a helical gear be used. That is, a type of the hydraulic actuator is not limited.

### INDUSTRIAL APPLICABILITY

The electro-magnetic control valve according to the present invention can be applied to an oil control valve for the oil pressure control which is used in a valve timing adjusting device for the internal combustion engine. However, the present invention is not limited to the oil control valve for the oil pressure control.

## Claims

1. An electro-magnetic control valve, comprising:
a movable shaft (16) which is driven in an axial direction or a rotation direction; and
a sleeve bearing member (19; 21) for supporting an outer circumferential surface of the movable shaft, having a groove (32; 33; 35) arranged on an inner circumferential surface of the sleeve bearing member (19; 21) and both ends of which are opened on both end surfaces of the sleeve bearing member in an axial direction of the sleeve bearing member;
**characterized in that** the groove is formed with a semi-circular or a rectangular cross section.

2. An electro-magnetic control valve according to claim 1, wherein the groove (32; 33; 35) is formed in a spiral shape along the axial direction of the sleeve bearing member (19; 21) between the end surfaces of the sleeve bearing member.

3. An electro-magnetic control valve according to claim 1, wherein the sleeve bearing member (19; 21) is formed by molding or is formed out of metallic particles by sintering.

4. An electro-magnetic control valve according to claim 1, wherein the inner circumferential surface of the sleeve bearing member (19; 21) is formed out of an oil-containing sintered material.

5. An electro-magnetic control valve according to claim 1, wherein the inner circumferential surface of the sleeve bearing member (19; 21) is formed out of fluorine-containing resin.

## Patentansprüche

1. Ein elektromagnetisches Steuerungsventil, umfassend:
einen beweglichen Schaft (16), der in eine axiale Richtung oder eine Drehrichtung angetrieben wird; und
ein Gleitlagerbauteil (19; 21) zum Unterstützen einer äußeren umlaufenden Fläche des beweglichen Schafts, der eine Fuge (32; 33; 35) aufweist, die auf einer inneren umlaufenden Fläche des Gleitlagerbauteils (19; 21) und beiden Enden, die an beiden Endflächen des Gleitlagerbauteils in einer axialen Richtung des Gleitlagerbauteils geöffnet sind, angeordnet ist;
**dadurch gekennzeichnet, dass** die Fuge mit einem halbkreisförmigen oder einem rechteckigen Querschnitt gebildet ist.

2. Ein elektromagnetisches Steuerungsventil nach Anspruch 1, wobei die Fuge (32; 33; 35) in einer Spiralform entlang der axialen Richtung des Gleitlagerbauteils (19; 21) zwischen den Endflächen des Gleitlagerbauteils gebildet ist.

3. Ein elektromagnetisches Steuerungsventil nach Anspruch 1, wobei das Gleitlagerbauteil (19; 21) durch Formen gebildet ist oder aus metallischen Partikeln durch Sintern gebildet ist.

4. Ein elektromagnetisches Steuerungsventil nach Anspruch 1, wobei die innere umlaufende Fläche des Gleitlagerbauteils (19; 21) aus einem Öl beinhaltenden Sintermaterial gebildet ist.

5. Ein elektromagnetisches Steuerungsventil nach Anspruch 1, wobei die innere umlaufende Fläche des Gleitlagerbauteils (19; 21) aus einem Fluor beinhaltenden Granulat gebildet ist.

## Revendications

1. Vanne de commande électromagnétique, comprenant :
un arbre mobile (16) qui est entraîné selon une direction axiale ou en rotation ; et
un élément formant palier (19 ; 21) pour supporter une surface circonférentielle externe de l'arbre mobile, comportant une gorge (32 ; 33 ; 35) ménagée sur une surface circonférentielle interne de l'élément formant palier (19 ; 21) et dont les deux extrémités sont ouvertes sur les deux surfaces d'extrémité de l'élément formant palier, selon une direction axiale de l'élément formant palier ;
**caractérisée en ce que** la gorge est formée d'une section droite semi-circulaire ou rectangulaire.

2. Vanne de commande électromagnétique selon la revendication 1, dans laquelle la gorge (32 ; 33 ; 35) est formée selon une forme spirale le long de la direction axiale de l'élément formant palier (19 ; 21) entre les surfaces d'extrémité de l'élément formant palier.

3. Vanne de commande électromagnétique selon la revendication 1, dans laquelle l'élément formant palier (19 ; 21) est formé par moulage ou est produit, par frittage, à partir de particules métalliques.

4. Vanne de commande électromagnétique selon la revendication 1, dans laquelle la surface circonférentielle interne de l'élément formant palier (19 ; 21) est produite à partir d'un matériau fritté contenant de l'huile.

5. Vanne de commande électromagnétique selon la revendication 1, dans laquelle la surface circonférentielle interne de l'élément formant palier (19 ; 21) est produite à partir d'une résine contenant du fluor.
